# EUROPÄISCHE PATENTSCHRIFT

(11) **EP 3 176 054 B1**
(45) Veröffentlichungstag und Bekanntmachung des Hinweises auf die Patenterteilung: **26.02.2020**
(21) Anmeldenummer: 16200138.2
(22) Anmeldetag: 23.11.2016
(51) Int. Cl.: B62B 7/12, B62B 9/18, B62K 27/02

(54) **RAHMEN FÜR EINEN ÜBER BLATTFEDERN GELAGERTEN TRANSPORTBEREICH EINES ZWEISPURIGEN LASTTRANSPORTFAHRZEUGS SOWIE LASTTRANSPORTFAHRZEUG IN FORM EINES FAHRRADANHÄNGERS ODER KINDERWAGENS**
FRAME FOR A TRANSPORT AREA OF A TWO TRACK LOAD TRANSPORT VEHICLE USING LEAF SPRINGS OR SWING ARMS FOR BEARINGS AND LOAD TRANSPORT VEHICLE IN THE FORM OF A BICYCLE TRAILER OR BABY CARRIAGE
CADRE POUR UNE ZONE DE TRANSPORT MONTÉE SUR DES RESSORTS À LAMES D'UN TRANSPORTEUR DE CHARGE SUR DEUX VOIES ET TRANSPORT DE CHARGE EN FORME DE REMORQUE POUR VÉLO OU CHARIOT D'ENFANT

(30) Priorität: 25.11.2015 DE 102015120432
(43) Veröffentlichungstag der Anmeldung: 07.06.2017
(73) Patentinhaber: Boldt, Julia, 53773 Hennef (DE)
(72) Erfinder: Boldt, Nikolai, 53773 Hennef (DE)
(74) Vertreter: Freischem & Partner Patentanwälte mbB

(56) Entgegenhaltungen:
- WO-A1-2009/067818
- CH-A- 223 690
- DE-U1- 20 219 545
- GB-A- 719 898
- US-A- 3 840 085
- US-A1- 2002 163 158
- US-B1- 6 273 441

## Beschreibung

Die Erfindung betrifft einen Rahmen für einen Transportbereich eines zweispurigen - und insbesondere nicht motorisierten - Lasttransportfahrzeugs in Form eines Fahrradanhängers nach dem Oberbegriff des Anspruchs 1, sowie ein Lasttransportfahrzeug einschließlich Fahrradanhänger mit einem solchen Rahmen.

Aus US 3,840.085 A ist ein Anhänger für ein Motorrad bekannt, wobei aus dem Anhänger heraus das Motorrad gesteuert werden soll. Der Anhänger weist einen Rahmen mit zwei Seitenträgern auf, welche über eine Radschwinge mit Radanbindungsstellen verbunden sind.

Aus WO 2009/067818 ist ein Lasttransportfahrzeug in Form eines Fahrradanhängers mit Seitenträgern bekannt, welche über eine Radschwinge mit den Rad-Anbindungsstellen verbunden sind. Die Seitenträger des Transportfahrzeuges erstrecken sich in Fahrzeughochrichtung betrachtet in einen Bereich unterhalb der Rad-Anbindungsstellen.

Aus DE 202 19 545 U1 ist eine Blattfederaufhängung für zweispurige Lasttransporter in Form von Fahrradanhängern und Kinderwagen bekannt. Bei den beschriebenen Lasttransportern sind die Blattfedern jeweils mit einem ersten Ende an einem korrespondierenden Seitenträger festgelegt und erstrecken sich von dem jeweiligen Seitenträger aus in Fahrzeuglängsrichtung nach hinten. An dem anderen Ende der Blattfedern ist eine Anbindungsstelle für ein Rad vorgesehen. Mittels einer an der Blattfeder arretierbaren und verstellbaren Klemmvorrichtung soll der Elastizitätsgrad der Blattfeder einstellbar sein.

Aus DE 10 2013 109 230 A1 ist eine Radaufhängung für ein nicht motorisiertes Fahrzeug, insbesondere für einen Kinderwagen oder einen Fahrradanhänger bekannt, die ein Chassis mit Seitenträgern und mindestens zwei an einer sogenannten Radschwinge gelagerte Räder umfasst. Bei der Radschwinge handelt es sich um ein schwenkbar gegenüber einem Seitenträger gelagertes Element, das eine Relativbewegung der Räder gegenüber den Seitenträgern und dem Chassis ermöglicht, insbesondere in Fahrzeughochrichtung. Die Radschwinge kann als geschobene oder gezogene Radschwinge ausgeführt sein.

Der Erfindung liegt die Aufgabe zugrunde, einen Rahmen für einen über Blattfedern gelagerten Transportbereich eines zweispurigen Lasttransportfahrzeugs zur Verfügung zu stellen, der einen hohen Federungskomfort ermöglicht.

Die Lösung der Aufgabe erfolgt mit einem Rahmen für einen Transportbereich eines zweispurigen Lasttransportfahrzeugs mit den Merkmalen des Anspruchs 1, sowie mit einem Lasttransportfahrzeug mit den Merkmalen des Anspruchs 13. Weitere praktische Ausführungsformen sind in Verbindung mit den abhängigen Ansprüchen beschrieben.

Ein erfindungsgemäßer Rahmen für einen Transportbereich eines zweispurigen Lasttranssportfahrzeugs in Form eines Fahrradanhängers umfasst mindestens zwei sich in Längsrichtung erstreckende Seitenträger, die in Fahrzeugquerrichtung (y-Richtung) beabstandet zueinander angeordnet sind und über mindestens ein sich in Querrichtung erstreckendes Element miteinander verbunden sind. Die Seitenträger sind ferner gegenüber korrespondierenden Rad-Anbindungsstellen über mindestens eine Blattfeder angebunden. Dabei weist gemäß Variante
a) mindestens einer der beiden Seitenträger in Fahrzeuglängsrichtung betrachtet ausgehend von einer Verbindungsstelle zwischen Seitenträger und Blattfeder einen nach unten gerichteten Verlauf (insbesondere einen gekrümmten Verlauf) derart auf, dass sich der Seitenträger in einen Bereich unterhalb der korrespondierenden Rad-Anbindungsstelle erstreckt und zwischen der Rad-Anbindungsstelle und dem sich in dem Bereich unterhalb dieser Rad-Anbindungsstelle erstreckenden Seitenträger ein sich in Fahrzeughochrichtung (z-Richtung) erstreckender Freiraum ausgebildet ist,
   oder gemäß Variante
b) weist mindestens einer der beiden Seitenträger in Fahrzeuglängsrichtung betrachtet ausgehend von einer Verbindungsstelle zwischen dem Seitenträger und der Blattfeder einen nach oben gerichteten Verlauf (insbesondere einen gekrümmten Verlauf) derart auf, dass sich der Seitenträger in einen Bereich oberhalb der korrespondierenden Rad-Anbindungsstelle erstreckt und somit ein sich in Fahrzeughochrichtung zwischen der Rad-Anbindungsstelle und dem sich in den Bereich oberhalb dieser Rad-Anbindungsstelle erstreckenden Seitenträger erstreckender Freiraum ausgebildet ist.
In dem Freiraum ist ein weiteres Feder- und/oder Dämpfungselement angeordnet.

Der genannte Freiraum muss nicht zwingend exakt unter bzw. über der Anbindungsstelle liegen. Der Freiraum kann sich auch nur in Fahrzeuglängsrichtung betrachtet auf der gleichen Höhe wie die Anbindungsstelle und unterhalb oder oberhalb derselben befinden, so dass eine Verbindungslinie zwischen der Rad-Anbindungsstelle und dem unterhalb oder oberhalb der Rad-Anbindungsstelle angeordneten Seitenträger in einer teilweise in Fahrzeugquerrichtung verlaufenden Richtung verläuft. Bevorzugt ist es jedoch, wenn der Seitenträger sich in einen Bereich exakt unterhalb oder oberhalb der Rad-Anbindungsstelle erstreckt, der sowohl in Fahrzeuglängsrichtung als auch in Fahrzeugquerrichtung betrachtet unterhalb oder oberhalb der Rad-Anbindungsstelle angeordnet ist.

In der Praxis sind Freiräume von mindestens 2 cm, weiter bevorzugt von mindestens 5 cm und besonders bevorzugt von mindestens 7 cm angestrebt, wobei sich die Maße jeweils auf die reine Erstreckung in Fahrzeughochrichtung beziehen.

In dem Freiraum zwischen dem Seitenträger in dem Bereich unterhalb oder oberhalb der Rad-Anbindungsstelle und der Anbindungsstelle ist ein weiteres Feder- und/oder Dämpfungselement angeordnet. Durch die Anordnung eines solchen weiteren Feder- und/oder Dämpfungselements können die Fahreigenschaften sowie die Feder- und Dämpfungsqualität des Transportbereichs eines Lasttransportfahrzeuges weiter verbessert werden, wodurch sich ein erhöhter Fahrkomfort ergibt.

Als besonders vorteilhaft wird die Kombination einer Blattfeder und einem Feder- und/oder Dämpfungselement angesehen. Mittels der Blattfeder kann ein Toleranzausgleich erzielt werden, der es ermöglicht, dass das Feder- und/oder Dämpfungselement genau vertikal (in z-Richtung) ausgerichtet ist. Somit kann einer Beeinträchtigung des Federverhaltens durch Verklemmen oder Verkanten entgegengewirkt werden.

Es wird noch einmal darauf hingewiesen, dass unter einem Lasttransportfahrzeug insbesondere Kindertransportfahrzeuge, wie beispielsweise Kinder-Fahrradanhänger zu verstehen sind, welche üblicherweise nicht motorisiert sind, aber gelegentlich oder sogar regelmäßig in einem normalen Kofferraum eines Kraftfahrzeuges transportiert werden sollen.

Zur Klarstellung wird darauf hingewiesen, dass unter dem vorstehend genannten Transportbereich, insbesondere Sitzflächen mit und ohne Rückenlehnen für Personen, insbesondere für Kinder zu verstehen sind. Als Transportbereich sollen jedoch gleichermaßen eine Ladefläche oder ein anders gestalteter Laderaum verstanden werden, der zum Transport von Waren eingesetzt werden kann.

Ein sich in Querrichtung erstreckendes Element kann insbesondere ein Querträger, ein Sitz oder ein sonstiges Verbindungselement sein.

Es wird weiterhin klargestellt, dass die erwähnten Seitenträger zusammen mit dem sich in Fahrzeugquerrichtung erstreckenden Element Teil des Transportbereichs sind
Durch einen Rahmen mit einem nach unten gerichteten Verlauf gemäß Variante a) kann die Rad-Anbindungsstelle eines Lasttransportfahrzeugs insbesondere von der Unterseite aus gegen mechanische Einwirkung geschützt werden. Ein solcher Schutz ist insbesondere dann sinnvoll, wenn Räder des Lasttransportfahrzeugs abnehmbar an den Rad-Anbindungsstellen befestigt sind, um das Lasttransportfahrzeug platzsparend transportieren zu können, insbesondere in einem Kofferraum oder einer Transportbox eines Kraftfahrzeuges.

Ein weiterer Vorteil eines erfindungsgemäßen nach unten gerichteten Rahmens gemäß Variante a) besteht darin, dass durch die Führung des Rahmens in einem Bereich unterhalb der Rad-Anbindungsstellen der Schwerpunkt des Lasttransportfahrzeuges, welcher durch das Gewicht des Rahmens mitbestimmt wird, sich in Richtung Boden verlagert. Dadurch ergibt sich ein insgesamt kippstabiles Lasttransportfahrzeug, insbesondere in Bezug auf Wankbewegungen während der bestimmungsgemäßen Benutzung.

Durch den in Variante a) gebildeten Freiraum wird verhindert, dass aufgrund einer Einwirkung von in Fahrzeughochrichtung von unten auf den Seitenträger wirkenden Kräften, wie sie beispielsweise auftreten können, wenn der Rahmen nach dem Abnehmen eines Rades auf dem Boden aufsetzt, nicht zu einer Durchbiegung des Seitenrahmens derart führt, dass der Seitenrahmen gegen die Rad-Anbindungsstelle schlägt und diese somit beschädigen könnte.

Als Standardteile in verschiedenen Größen und Auslegungsvarianten verfügbar sind insbesondere als Feder- und/oder Dämpfungselemente dienende Schraubenfedern, Luftfedern, elastische Pufferelemente und/oder Dämpfungselemente verfügbar. Derartige Elemente können als Standardbauteile in dem Freiraum angeordnet werden, um den Fahrkomfort eines Lasttransportfahrzeugs signifikant zu erhöhen.

In einer bevorzugten praktischen Ausführungsform der Erfindung ist das Feder- und/oder Dämpfungselement eine Schraubenfeder und/oder eine Luftfeder. Dabei ist die Schraubenfeder und/oder die Luftfeder insbesondere in einer überwiegend in Fahrzeughochrichtung orientierten Wirkrichtung angeordnet, beispielsweise im unbeladenen Zustand des Fahrradanhängers mit einer Winkelabweichung von maximal 20° zur Schwerkraftrichtung, bevorzugt maximal 10°. Es hat sich gezeigt, dass insbesondere die Kombination einer Blattfeder mit einer Schraubenfeder und/oder Luftfeder zu einem ausgewogenen und für die Insassen eines Fahrradanhängers angenehmen Federungskomfort führt.

Ein besonderer Vorteil beim Einsatz einer Schraubenfeder, welche einerseits an dem Rad-Anbindungselement und andererseits an dem Seitenträger oder einen mit dem Seitenträger fest verbundenen Element festgelegt ist, besteht darin, dass die Schraubenfeder keine Seitenführung in Form eines Gehäuses oder einer sonstigen Einhausung benötigt. Damit kann eine Schraubenfeder, die als solche relativ kostengünstig zur Verfügung steht, anders als bei aus dem Stand der Technik bekannten Lasttransportfahrzeugen besonders kostengünstig als Federelement eingesetzt werden.

Insbesondere kann ein weiteres Feder- und/oder Dämpfungselement an der korrespondierenden Rad-Anbindungsstelle und/oder an einem Abschnitt des Seitenträgers unterhalb bzw. oberhalb der Rad-Anbindungsstelle unmittelbar oder mittelbar festgelegt sein. Eine mittelbare Festlegung kann insbesondere über separate Halteelemente erfolgen, die beispielsweise an der Rad-Anbindungsstelle und/oder an dem sich unterhalb bzw. oberhalb der Rad-Anbindungsstelle befindenden Seitenträger angebracht sein können. Eine Festlegung weiterer Feder- und/oder Dämpfungselemente an der Rad-Anbindungsstelle und an dem Seitenträger hat den Vorteil, dass ein permanenter Kontakt des Feder- und/oder Dämpfungselements zwischen diesen Element vorliegt und die Wirkung des Feder- und/oder Dämpfungselements bei jeder Bewegung des Transportbereichs bzw. Seitenträgers, insbesondere in Fahrzeughochrichtung, unmittelbar einsetzt. Dadurch wird ausgeschlossen, dass eine schlagartige Krafteinwirkung einsetzt, wenn ein nur mit einem der beiden Elemente (Rad-Anbindungsstelle oder Seitenträger) verbundenes Feder- und/oder Dämpfungselement mit dem Element in Kontakt tritt, mit welchem es nicht verbunden ist.

In einer praktischen Ausführungsform eines erfindungsgemäßen Rahmens ist mindestens einer der Seitenträger derart ausgebildet, dass er in der Seitenansicht des Lasttransportfahrzeuges die Rad-Anbindungsstelle des korrespondierenden Rades mindestens halbseitig von der Unterseite bzw. von der Oberseite her umschließt. Mit halbseitig ist gemeint, dass sich der Rahmen über einen Umfangsbereich von etwa 180° erstreckt. Dadurch ergibt sich eine robuste Konstruktion. Ferner besteht die Möglichkeit, eine Blattfeder oder Radschwinge einerseits ausgehend von einem Bereich des Seitenrahmens, das sich vor der Rad-Anbindungsstelle befindet, sich von vorne nach hinten erstreckend anzuordnen, und andererseits ausgehend von einem Bereich des Seitenrahmens, der sich hinter der Rad-Anbindungsstelle befindet, sich von hinten nach vorne erstreckend anzuordnen.

Ein die Rad-Anbindungsstelle von der Unterseite umschließender Rahmen hat den weiteren Vorteil, dass die Rad-Anbindungsstelle bei abgenommenen Rad auch von der Rückseite her durch den Seitenträger geschützt angeordnet ist. Dies gilt insbesondere, wenn auch in Fahrzeuglängsrichtung betrachtet ein Freiraum zwischen dem Seitenträger sowohl vor als auch hinter der Rad-Anbindungsstelle vorgesehen ist. Hinsichtlich der Abstände in Fahrzeuglängsrichtung zwischen Seitenträger und der Rad-Anbindungsstelle gelten die vorstehend bereits genannten Maße gleichermaßen.

Der mindestens eine Seitenträger kann auch als geschlossener Seitenrahmen ausgebildet sein. Im Falle eines geschlossenen Seitenrahmens ergibt sich eine besonders hohe Biegesteifigkeit des Seitenrahmens, welche sich auch positiv auf die Biegesteifigkeit des gesamten Lasttransportfahrzeugs auswirkt.

Insbesondere in Verbindung mit Variante a) kann der geschlossene Seitenrahmen in der Seitenansicht des Lasttransportfahrzeugs die Rad-Anbindungsstelle des korrespondierenden Rades vollständig umschließen. Mit einer umschließenden Ausbildung eines Seitenträgers als geschlossener Seitenrahmen ist gemeint, dass sich mindestens ein Seitenträger von einem Bereich in Längsrichtung vor einer korrespondierenden Rad-Anbindungsstelle bis in einem Bereich hinter dieser Rad-Anbindungsstelle erstreckt. Dabei ist es besonders bevorzugt, wenn, die Rad-Anbindungsstelle unterseitig umschließend, z. B. U-förmig und/oder bogenförmig, ausgebildet ist, so dass in einem halbkreisförmigen Bereich unterhalb der Rad-Anbindungsstelle in jeder radialen Richtung ein Mindest-Freiraum zwischen der Rad-Anbindungsstelle und dem Seitenträger verbleibt.

In einer weiteren praktischen Ausführungsform eines erfindungsgemäßen Rahmens ist die mindestens eine Blattfeder mindestens einseitig umschließend von einem Element im Bereich der Rad-Anbindungsstelle oder einem Element im Bereich der Verbindungsstelle zwischen Blattfeder und Seitenträger aufgenommen. Eine derartige Aufnahme der Blattfeder erfolgt vorzugsweise so, dass die Enden nicht aus dem Element herausragen. Somit kann eine Vermeidung von scharfen Kanten, welche an als Standardbauteilen verfügbaren Blattfedern üblicherweise im Bereich der Enden ausgebildet sind, zur Verringerung der Verletzungsgefahr von in dem Lasttransportanhänger zu transportierenden Waren oder Personen vermieden werden.

In einer weiteren praktischen Ausführungsform eines erfindungsgemäßen Rahmens sind die Rad-Anbindungsstellen über einen sich in Fahrzeugquerrichtung erstreckenden Querträger miteinander verbunden. Eine solche Gestaltung ist insbesondere in Verbindung mit Blattfedern vorteilhaft, da durch den sich in Fahrzeugquerrichtung erstreckenden Querträger einer Schwenkbarkeit der Räder um die Fahrzeuglängsachse entgegengewirkt wird. Als Querträger geeignet sind insbesondere Stangen und sonstige Profile, welche eine direkte Verbindung zwischen zwei parallel nebeneinander angeordneten Rad-Anbindungsstellen herstellen. Als Querträger geeignet sind jedoch auch flächenartig ausgebildete Element, wie beispielsweise Sitze, Blechwannen oder sonstige Transportflächen oder Wannen.

In einer weiteren praktischen Ausführungsform ist die mindestens eine Blattfeder in Fahrzeugquerrichtung (y-Richtung) betrachtet innenseitig der Rad-Anbindungsstelle angeordnet. Insbesondere sind an einem rechten Seitenträger und an einem linken Seitenträger jeweils eine Blattfeder und ein weiteres Feder- und/oder Dämpferelement jeweils innenseitig einer Rad-Anbindungsstelle angeordnet. Dies hat den Vorteil, dass die Blattfeder sowie das weitere Feder- und/oder Dämpferelement von außen durch den Seitenrahmen verdeckt und somit geschützt angeordnet sind.

Unabhängig von der innenseitigen Anordnung ist es bevorzugt, wenn die mindestens eine Blattfeder in Fahrzeugquerrichtung betrachtet jeweils in der gleichen Ebene angeordnet sind wie das weitere Feder- und/oder Dämpferelement, insbesondere derart, dass sich eine zweischenklige Anordnung mit einem ersten, sich überwiegend in Fahrzeuglängsrichtung erstreckenden Schenkel aus der Längserstreckungsrichtung der Blattfeder und einem zweiten, sich überwiegend in Fahrzeughochrichtung erstreckenden Schenkel aus dem weiteren Feder- und/oder Dämpferelement ergibt.

Ein besonders hoher Fahrkomfort ergibt sich, wenn die Rad-Anbindungsstellen ausschließlich über die jeweils mindestens eine Blattfeder verbunden sind. Alternativ können auch die ausgebildeten weiteren Feder- und/oder Dämpfungselemente Verbindungsstellen zu den Seitenträgern darstellen. Entscheidend für einen hohen Fahrkomfort ist, dass über die Räder einwirkende Kräfte auf den Transportbereich nur über eine federnde und/oder dämpfende Verbindung zum Transportbereich gelangen können. Dazu sind starre Verbindungen zwischen den Rad-Anbindungsbereichen sowie fest mit den Rad-Anbindungsbereichen verbundene Elemente zu vermeiden.

Besondere Vorteile eines erfindungsgemäßen Rahmens ergeben sich, wenn mindestens ein Seitenträger oder ein Seitenrahmen (vorzugsweise beide) zusammenklappbar ausgebildet sind. Dies gilt insbesondere für geschlossene Seitenrahmen. Dies ist die Vorrausetzung für ein auf ein kleines Packmaß zusammenklappbares Lasttransportfahrzeug. Eine solche Funktion wird bei Lasttransportfahrzeugen insbesondere in Form eines Fahrradanhängers heutzutage regelmäßig erwartet. Eine Zusammenklappbarkeit des Seitenträgers oder Seitenrahmens kann insbesondere durch die Anordnung von Gelenken zwischen einzelnen Rahmenelementen und/oder Einzelelementen eines Seitenträgers erfolgen. Um trotz dieser Gelenke eine hohe Steifigkeit des Rahmens insbesondere im hoch belasteten bodennahmen Bereich zu erzielen, ist es besonders bevorzugt, wenn der untere Seitenträger aus einem einstückigen Element ausgebildet ist, das sich über einen Großteil der Länge des Lasttransportfahrzeugs erstreckt und mehrere Gelenke eines geschlossenen Seitenrahmens im oberen Bereich des Seitenrahmens angeordnet sind.

Die Funktionalität eines erfindungsgemäßen Rahmens kann weiter erhöht werden, wenn die Seitenträger im in Fahrzeuglängsrichtung betrachtet hinteren Bereich des Lasttransportfahrzeugs über mindestens einen sich in Fahrzeugquerrichtung erstreckenden Querträger miteinander verbunden sind, der als rückseitige Abstützung einer Rückenlehne dient.

Es wird allgemein noch darauf hingewiesen, dass sämtliche vorstehend anhand mindestens eines Seitenträgers beschriebenen Merkmale der Erfindung vorzugsweise an zwei nebeneinander angeordneten Seitenträgern realisiert sind. Ferner wird darauf hingewiesen, dass von dem Begriff Lasttransportfahrzeuge insbesondere Fahrradanhänger, vor allem zum Transport von Kindern mit einem wie vorstehend beschriebenen Rahmen umfasst sein sollen.

In einer praktischen Ausführungsform eines erfindungsgemäßen Lasttransportfahrzeuges, insbesondere eines Fahrradanhängers, sind eine rechte Rad-Anbindungsstelle und eine linke Rad-Anbindungsstelle jeweils über mindestens eine Blattfeder an einem rechten bzw. einem linken Seitenträger angebunden, d.h. die rechte Rad-Anbindungsstelle ist über eine rechte Blattfeder an einem rechten Seitenträger angebunden und die linke Rad-Anbindungsstelle ist über eine linke Blattfeder an einem linken Seitenträger angebunden. Ferner sind die rechte Rad-Anbindungsstelle und die linke Rad-Anbindungsstelle zusätzlich über ein weiteres Feder- und/oder Dämpferelement an dem rechten Seitenträger bzw. an dem linken Seitenträger angebunden, d.h. die rechte Rad-Anbindungsstelle ist zusätzlich über ein weiteres (rechtes) Feder- und/oder Dämpferelement mit dem rechten Seitenrahmen verbunden und die linke Rad-Anbindungsstelle ist zusätzlich über ein weiteres (linkes) Feder und/oder Dämpferelemente an dem linken Seitenträger angebunden. Damit sind die Rad-Anbindungsstellen über zwei unterschiedliche Federpfade mit dem jeweiligen Seitenträger verbunden, wodurch sich ein besonders guter Federungskomfort erzielen lässt.

Bevorzugt ist es, wenn die oben genannten Rad-Anbindungsstellen jeweils über mindestens eine sich überwiegend in Fahrzeuglängsrichtung erstreckende Blattfeder und mindestens eine sich überwiegend in Fahrzeughochrichtung erstreckende Schraubenfeder und/oder Luftfeder an den Seitenträgern angebunden sind. Mit sich überwiegend in Fahrzeuglängsrichtung bzw. Fahrzeugquerrichtung erstreckend sind insbesondere Abweichungen von der jeweiligen Hauptrichtung um bis zu 30°, bevorzugt bis zu 20° und weiter bevorzugt bis zu 15° umfasst. Bei der Schraubenfeder bzw. Luftfeder ist die jeweilige Wirkrichtung mit der Erstreckungsrichtung gemeint.

Weitere praktische Ausführungsformen und Vorteile der Erfindung sind nachfolgend im Zusammenhang mit den Zeichnungen beschrieben. Es zeigen:
- Fig. 1: eine erste Ausführungsform eines erfindungsgemäßen Rahmens mit Blattfeder in einer Seitenansicht,
- Fig. 2: eine zweite Ausführungsform eines Rahmens mit Radschwinge in einer Seitenansicht,
- Fig. 3: eine dritte Ausführungsform eines erfindungsgemäßen Rahmens mit Blattfeder und Schraubenfeder in einer Seitenansicht,
- Fig. 4: den erfindungsgemäßen Rahmen aus Fig. 3 in einer perspektivischen Darstellung von schräg hinten,
- Fig. 5: eine vergrößerte Darstellung des in Fig. 3 mit V gekennzeichneten Bereichs,
- Fig. 6: eine vergrößerte Darstellung des in Fig. 4 mit VI gekennzeichneten Bereichs allerdings in einer Ansicht von schräg vorne,
- Fig. 7: den erfindungsgemäßen Rahmen gemäß der dritten Ausführungsform in einem zusammengeklappten Zustand in einer Seitenansicht,
- Fig. 8: diese drei Ausführungsformen des erfindungsgemäßen Rahmens in einem zusammengeklappten Zustand in einer perspektivischen Darstellung von schräg vorne,
- Fig. 9: eine vierte Ausführungsform eines erfindungsgemäßen Rahmens mit Blattfeder in einer Seitenansicht, und
- Fig. 10: eine vergrößerte Darstellung des in Fig. 9 mit X gekennzeichneten Bereichs.

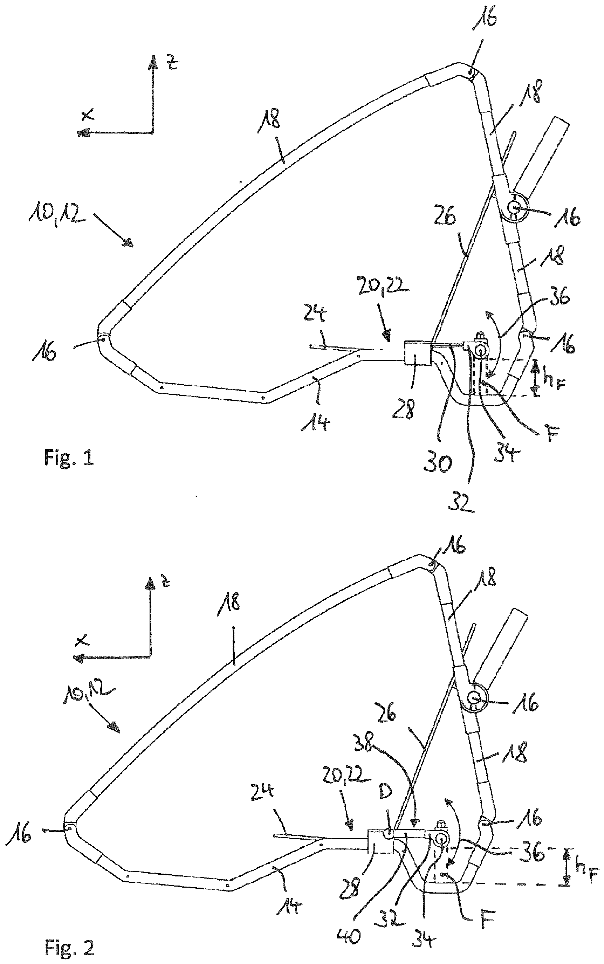

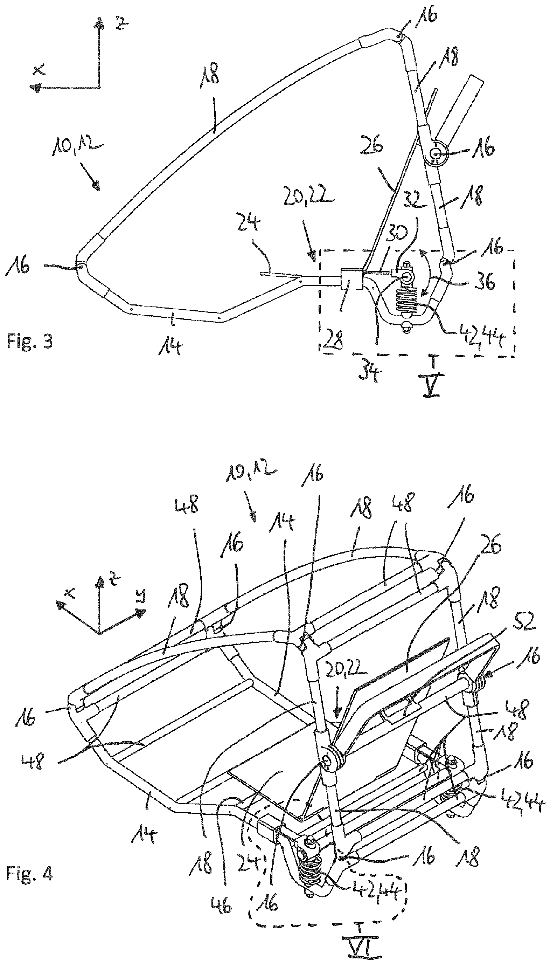

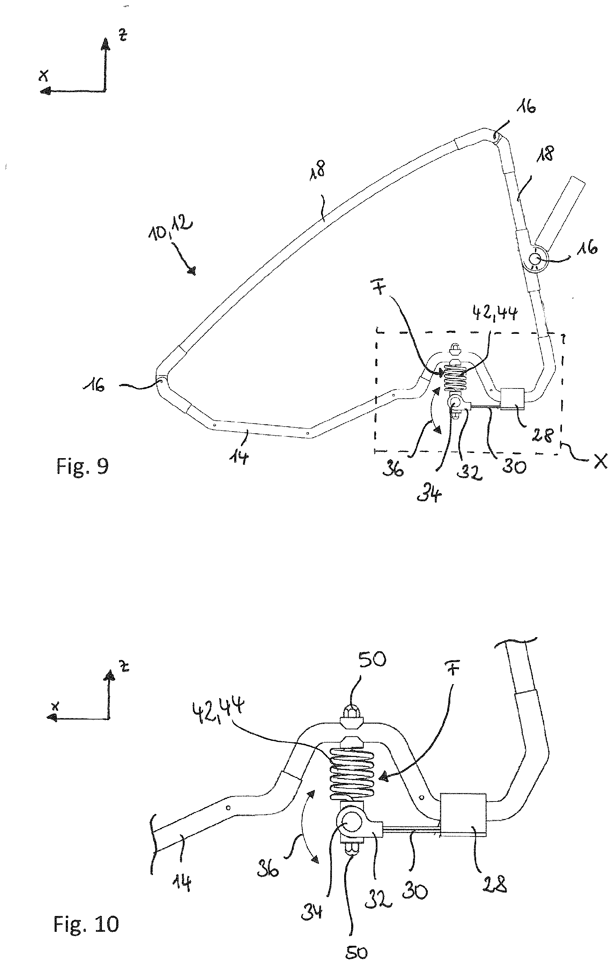

In Figur1 ist eine erste einfache Ausführungsform eines erfindungsgemäßen Rahmens gemäß der Variante a) und in Fig. 2 eine zweite einfache Ausführungsform eines Rahmens 10 für einen Fahrradanhänger jeweils in einer Seitenansicht dargestellt. In diesen Ausführungsformen ist kein Feder- und/oder Dämpfungselement dargestellt. Der Aufbau dieser Rahmen 10 wird zunächst anhand der in Figur 1 gezeigten ersten Ausführungsform erläutert. Dabei wird - insbesondere zur Erläuterung von sich in Querrichtung erstreckenden Elementen, die in der Seitenansicht nicht erkennbar sind - teilweise auch auf Figuren Bezug genommen, die andere Ausführungsformen zeigen. Es soll insoweit davon ausgegangen werden, dass Elemente, die in Verbindung mit den Figuren 1 oder 2 unter Bezugnahme auf die Figuren 3-8 beschrieben werden, in der ersten Ausführungsform (Figur 1) und in der zweiten Ausführungsform (Figur 2) identisch ausgebildet sind wie in der dritten Ausführungsform. In Verbindung mit den Figuren 2-8 und einer in Verbindung mit den Figuren 9 und 10 beschriebenen vierten Ausführungsform wird im Wesentlichen nur noch auf wichtige Unterschiede zu der ersten Ausführungsform Bezug genommen. Für identische oder zumindest funktionsgleiche Elemente werden in allen Figuren die gleichen Bezugszeichen verwendet.

Der in Figur 1 gezeigte Rahmen 10 weist zwei parallel zueinander angeordnete, geschlossene Seitenrahmen 12 auf, von denen in der Seitenansicht nur einer erkennbar ist. Die als geschlossene Struktur ausgebildeten Seitenrahmen 12 umfassen jeweils einen sich in Fahrzeuglängsrichtung (x-Richtung) erstreckenden unteren Seitenträger 14, welcher über Gelenke 16 mit weiteren Rahmenelementen 18 verbunden ist.

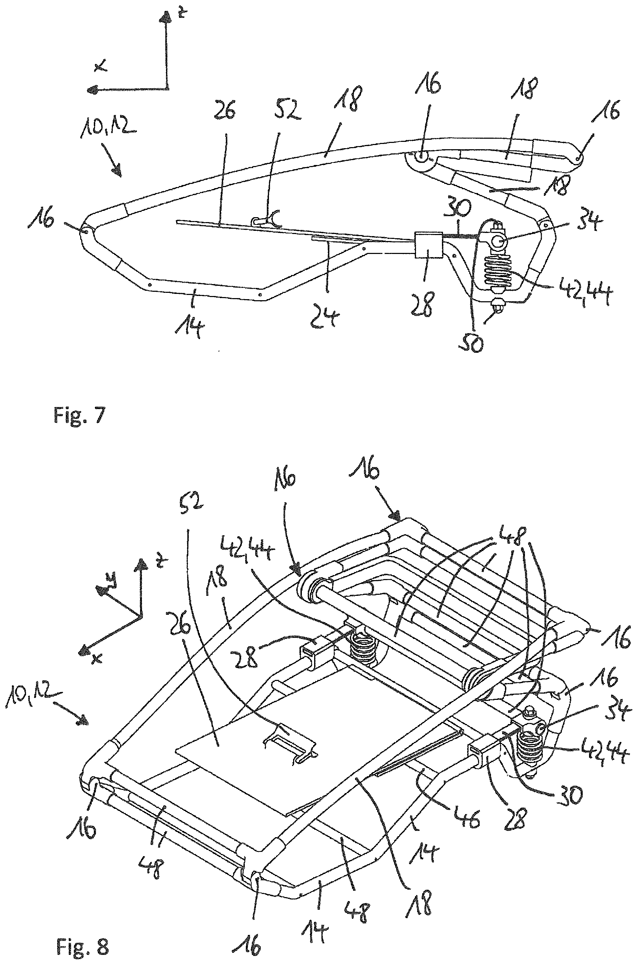

Ein sich in Fahrzeugquerrichtung erstreckender Querträger 46 sowie weitere, sich in Fahrzeugquerrichtung erstreckende Querträger 48 sind fest mit den Seitenträgern 14 verbunden und bilden damit einen biegesteifen Rahmen 10 (vgl. Figuren 4 und 8). Fest mit dem Querträger 46 verbunden ist ein weiteres sich in Fahrzeugquerrichtung erstreckendes Element 20 in Form eines Sitzes 22. Der Sitz 22 umfasst eine überwiegend horizontal ausgerichtete Sitzfläche 24 und eine überwiegend vertikal ausgerichtete Rückenlehne 26. Die relative Anordnung der Seitenträger 14 zu dem Sitz 22 und zu weiteren Elementen ist gut in den perspektivischen Darstellungen der Figuren 4 und 8 erkennbar.

Mit dem Seitenträger 14 ist an einer ersten Verbindungsstelle ein erstes Verbindungselement 28 verbunden, in welchem eine Blattfeder 30 mit einem ersten Ende aufgenommen ist. Das gegenüberliegende zweite Ende der Blattfeder 30 ist an einer zweiten Verbindungsstelle von einem zweiten Verbindungselement 32 aufgenommen, an welchem eine Rad-Anbindungsstelle 34 ausgebildet ist.

Wie aus Figur 1 ersichtlich ist, weist der Seitenträger 14 in Fahrzeuglängsrichtung betrachtet ausgehend von dem Verbindungselement 28 einen nach unten (d.h. entgegen des in z-Richtung weisenden Pfeils) gerichteten (hier auch gekrümmten) Verlauf derart auf, dass sich der Seitenträger 14 in einen Bereich unterhalb der korrespondierenden Rad-Anbindungsstelle 34 erstreckt. Dies ist derart realisiert, dass ein sich in Fahrzeughochrichtung zwischen der Rad-Anbindungsstelle 34 und dem sich in dem Bereich unterhalb dieser Rad-Anbindungsstelle erstreckenden Seitenträger 14 erstreckender Freiraum F (gekennzeichnet durch den gestrichelt dargestellten Bereich) mit einer Höhe h_{F} ausgebildet ist.

Kräfte, die beispielsweise vom Boden auf in Figur 1 nicht dargestellte Räder auf die Rad-Anbindungsstelle 34 einwirken, werden nicht oder nur in gedämpfter Form in den mit dem Rahmen 10 gekoppelten Transportbereich übertragen, weil die Seitenträger 14 über Blattfedern 30 federnd an die Rad-Anbindungsstellen 34 angebunden sind. Der Transportbereich kann dadurch gegenüber der Rad-Anbindungsstelle 34 eine schwingende Bewegung ausführen, insbesondere in Richtung des Pfeils 36.

Die in Figur 2 gezeigte zweite Ausführungsform eines Rahmens 10 unterscheidet sich von der ersten Ausführungsform dadurch, dass die Verbindung zwischen Seitenträger 14 und Rad-Anbindungsstelle 34 an jeder Seite über eine Radschwinge 38 erfolgt. In der gezeigten Ausführungsform besteht die Radschwinge jeweils aus einem in Richtung des Pfeils 36 um eine Drehachse D schwenkbar gelagerten Schwingenelement 40, das mit einem nicht dargestellten Federelement eine überwiegend horizontale Neutrallage aufweist. Zur Reduzierung von über die Rad-Anbindungsstellen 34 einwirkenden Kräften ermöglichen die Radschwingen 38 eine Schwingbewegung zwischen Seitenträgern 14 und dem mit den Seitenträgern 14 verbundenen Transportbereich einerseits und den Rad-Anbindungsstellen 34 andererseits, insbesondere in Richtung des Pfeils 36.

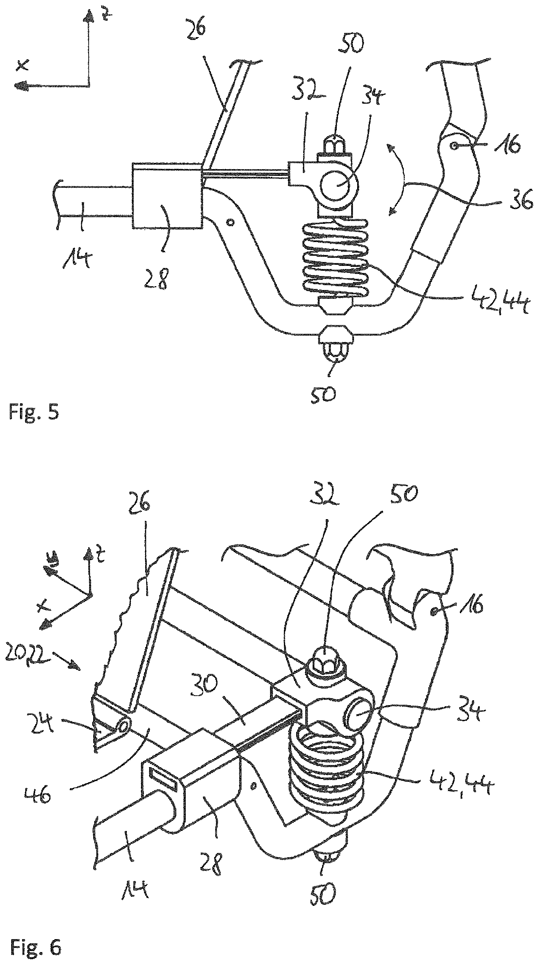

In den Figuren 3-8 ist eine dritte Ausführungsform eines erfindungsgemäßen Rahmens für einen Fahrradanhänger gezeigt. Wie erkennbar ist, sind bei dieser Ausführungsform als zusätzliche Federelemente 42 dienende Schraubenfedern 44 in dem Freiraum F angeordnet. Wie insbesondere in den Figuren 5 und 6 gut erkennbar ist, ist die jeweilige Schraubenfeder 44 mit einem oberseitigen Ende an dem zweiten Verbindungselement 32 im Bereich der Rad-Anbindungsstelle festgelegt und mit einem unterseitigen Ende an dem Seitenträger 14 festgelegt. In der gezeigten Ausführungsform ist die jeweilige Schraubenfeder 44 dazu mit jedem Ende mittels einer Schraube 50 an dem korrespondierenden Element fixiert.

Ebenfalls gut in den Figuren 5 und 6 erkennbar ist, dass die Enden der Blattfeder 30 jeweils vollständig in dem ersten Verbindungselement 28 bzw. in dem zweiten Verbindungselement 30 aufgenommen und somit von den Verbindungselementen 28, 32 schützend umschlossen sind.

In Figur 4 ist erkennbar, dass in der Rückenlehne 26 ein Rastelement 52 ausgebildet ist, das im Gebrauchszustand des Rahmens 10 mit einem Querträger 48 verrastet, so dass sich die Rückenlehne 26 an dem Querträger 48 abstützt.

In den Figuren 7 und 8, in welchen der Rahmen 10 in einem zusammengeklappten und platzsparenden Transportzustand gezeigt ist, ist gut zu erkennen, dass an den jeweiligen Seitenrahmen 12 insgesamt vier Gelenke 16 ausgebildet sind und dass die unten angeordneten Seitenträger 14 sich ohne Gelenk praktisch über die gesamte Länge des Rahmens 10 erstrecken. Ebenfalls gut erkennbar ist, dass die Seitenträger 14 die Rad-Anbindungsstellen 34 halbseitig von der Unterseite her umschließen, in der gezeigten Ausführungsform ungefähr trapezförmig, und zwar derart, dass ausgehend von der Rad-Anbindungsstelle 34 in jede horizontale und/oder zumindest teilweise nach unten verlaufende Richtung ein Mindestabstand von 5 cm eingehalten wird.

In den Figuren 9 und 10 ist eine vierte Ausführungsform eines erfindungsgemäßen Rahmens 10 gemäß Variante b) für einen Fahrradanhänger gezeigt.

Wie auch in den vorherigen Ausführungsformen beschrieben, weisen die jeweils geschlossenen Seitenrahmen 12 einen Seitenträger 14 auf, wobei mit dem Seitenträger 14 an einer ersten Verbindungsstelle ein erstes Verbindungselement 28 verbunden ist, in welchem eine Blattfeder 30 mit einem ersten Ende aufgenommen ist. Das gegenüberliegende zweite Ende der Blattfeder 30 ist an einer zweiten Verbindungsstelle von einem zweiten Verbindungselement 32 aufgenommen. Dieses Verbindungselement weist auch eine Rad-Anbindungsstelle 34 auf bzw. ist mit einer Rad-Anbindungsstelle 34 fest verbunden.

Der Seitenträger 14 der in Fig. 9 und 10 gezeigten vierten Ausführungsform weist in Fahrzeuglängsrichtung betrachtet ausgehend von dem Verbindungselement 28 einen nach oben (d.h. in z-Richtung) gerichteten (hier auch mehrfach gekrümmten) Verlauf derart auf, dass sich der Seitenträger 14 in einen Bereich oberhalb der korrespondierenden Rad-Anbindungsstelle 34 erstreckt. Dies ist derart realisiert, dass ein sich in Fahrzeughochrichtung zwischen der Rad-Anbindungsstelle 34 und dem sich in dem Bereich oberhalb dieser Rad-Anbindungsstelle erstreckenden Seitenträger 14 erstreckender Freiraum F ausgebildet ist. In diesem Freiraum F ist in der gezeigten Ausführungsform eine Schraubenfeder 44 angeordnet.

Ebenfalls gut erkennbar ist, dass der Seitenträger 14 die Rad-Anbindungsstelle 34 halbseitig von der Oberseite her umschließt. Dazu weist der Seitenträger 14 in der gezeigten Ausführungsform eine u-förmige Geometrie auf, die zusammen mit der Erstreckungsebene der Blattfeder 30 eine Trapezform ergibt. In der gezeigten Ausführungsform wird ausgehend von der Rad-Anbindungsstelle 34 in jede horizontale und/oder zumindest teilweise nach oben verlaufende Richtung ein Mindestabstand von 5 cm zwischen der Rad-Anbindungsstelle 34 und dem Seitenträger 14 eingehalten.

Auch für diese vierte Ausführungsform werden Kräfte, die beispielsweise vom Boden auf in Figur 9 nicht dargestellte Räder auf die Rad-Anbindungsstelle 34 einwirken, nicht oder nur in gedämpfter Form in den mit dem Rahmen 10 gekoppelten Transportbereich übertragen, weil die Seitenträger 14 über Blattfedern 30 und über Schraubenfedern 44 zweifach federnd an den Rad-Anbindungsstellen 34 angebunden sind. Der Transportbereich kann dadurch gegenüber der Rad-Anbindungsstelle 34 eine schwingende Bewegung ausführen, insbesondere in Richtung des Pfeils 36 und in Hochrichtung (z-Richtung).

Die als zusätzliches Federelement 42 dienende Schraubenfeder 44 ist mit einem unterseitigen Ende an dem zweiten Verbindungselement 32 im Bereich der Rad-Anbindungsstelle festgelegt und mit einem oberseitigen Ende an dem Seitenträger 14 festgelegt. In der gezeigten Ausführungsform ist die jeweilige Schraubenfeder 44 dazu mit jedem Ende mittels einer Schraube 50 und einem geeigneten Befestigungsmittel (z.B. einer Schelle) an dem korrespondierenden Element fixiert.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden. Diesbezüglich wird insbesondere noch einmal darauf verwiesen, dass alternativ oder in Ergänzung zu der in Verbindung mit dem dritten und vierten Ausführungsbeispiel beschriebenen Schraubenfeder auch andere Feder- und/oder Dämpfungselemente vollständig oder teilweise in dem Freiraum angeordnet werden können, insbesondere bekannte Feder- oder Dämpfungselemente mechanischer, pneumatischer oder hydraulischer Art. Diesbezüglich wird explizit auf Schraubenfedern, Torsionsfedern, Torsions- und Drehstabfedern, Biegefedern, Luftfedern, Gasdruckfedern, Elastomerfedern verwiesen sowie auf als Stoßfämpfer geeignete Dämpfungselemente, wie z.B. mechanische, hydraulische und pneumatische Dämpfungselemente.

### Bezugszeichenliste

- 10: Rahmen
- 12: Seitenrahmen
- 14: Seitenträger
- 16: Gelenk
- 18: Rahmenelement
- 20: Element
- 22: Sitz
- 24: Sitzfläche
- 26: Rückenlehne
- 28: erstes Verbindungselement
- 30: Blattfeder
- 32: zweites Verbindungselement
- 34: Rad-Anbindungsstelle
- 36: Pfeil
- 38: Radschwinge
- 40: Schwingenelement
- 42: Federelement
- 44: Schraubenfeder
- 46: erster Querträger
- 48: weiterer Querträger
- 50: Schraube
- 52: Rastelement
- F: Freiraum
- D: Drehachse

## Patentansprüche

1. Rahmen für einen Transportbereich eines zweispurigen Lasttransportfahrzeugs in Form eines Fahrradanhängers, mit mindestens zwei sich in Längsrichtung erstreckenden Seitenträgern (14), die in Fahrzeugquerrichtung beabstandet zueinander angeordnet und über mindestens ein sich in Fahrzeugquerrichtung erstreckendes Element miteinander verbunden sind, wobei mit den Seitenträgern (14) korrespondierende Rad-Anbindungsstellen (34) über mindestens eine Blattfeder (30) an den Seitenträgern (14) angebunden sind, wobei
a) mindestens einer der beiden Seitenträger (14) in Fahrzeuglängsrichtung betrachtet ausgehend von einer Verbindungsstelle zwischen dem Seitenträger (14) und der Blattfeder (30) einen nach unten gerichteten Verlauf derart aufweist, dass sich der Seitenträger (14) in einen Bereich unterhalb der korrespondierenden Rad-Anbindungsstelle (34) erstreckt und somit ein sich in Fahrzeughochrichtung zwischen der Rad-Anbindungsstelle (34) und dem sich in den Bereich unterhalb dieser Rad-Anbindungsstelle (34) erstreckenden Seitenträger (14) erstreckender Freiraum ausgebildet ist,
oder
b) mindestens einer der beiden Seitenträger (14) in Fahrzeuglängsrichtung betrachtet ausgehend von einer Verbindungsstelle zwischen dem Seitenträger (14) und der Blattfeder (30) einen nach oben gerichteten Verlauf derart aufweist, dass sich der Seitenträger (14) in einen Bereich oberhalb der korrespondierenden Rad-Anbindungsstelle (34) erstreckt und somit ein sich in Fahrzeughochrichtung zwischen der Rad-Anbindungsstelle (34) und dem sich in den Bereich oberhalb dieser Rad-Anbindungsstelle (34) erstreckenden Seitenträger (14) erstreckender Freiraum ausgebildet ist,
**dadurch gekennzeichnet,**
**dass** in dem Freiraum ein weiteres Feder- und/oder Dämpfungselement (42) angeordnet ist.

2. Rahmen nach dem vorstehenden Anspruch, **dadurch gekennzeichnet, dass** das weitere Feder- und/oder Dämpfungselement (42) eine Schraubenfeder (44) und/oder eine Luftfeder ist.

3. Rahmen nach einem der vorstehenden Ansprüche, **dadurch gekennzeichnet, dass** das weitere Feder- und/oder Dämpfungselement (42) an der korrespondierenden Rad-Anbindungsstelle (34) und/oder an einem Abschnitt des Seitenträgers (14) unterhalb oder oberhalb der Rad-Anbindungsstelle (34) unmittelbar oder mittelbar festgelegt ist.

4. Rahmen nach einem der vorstehenden Ansprüche, **dadurch gekennzeichnet, dass** sich der Freiraum in Fahrzeughochrichtung betrachtet über mindestens 2 cm erstreckt.

5. Rahmen nach dem vorstehenden Anspruch, **dadurch gekennzeichnet, dass** mindestens einer der Seitenträger (14) derart ausgebildet ist, dass er in der Seitenansicht des Lasttransportfahrzeugs die Rad-Anbindungsstelle (34) des korrespondierenden Rades mindestens halbseitig von der Unterseite oder der Oberseite her umschließt.

6. Rahmen nach einem oder mehreren der vorstehenden Ansprüche, **dadurch gekennzeichnet, dass** mindestens einer der Seitenträger (14) als geschlossener Seitenrahmen (12) ausgebildet ist.

7. Rahmen nach dem vorstehenden Anspruch und gemäß Variante a) aus Anspruch 1, **dadurch gekennzeichnet, dass** der Seitenträger (14) in der Seitenansicht des Lasttransportfahrzeugs die Rad-Anbindungsstelle (34) des korrespondierenden Rades vollständig umschließt.

8. Rahmen nach einem oder mehreren der vorstehenden Ansprüche, **dadurch gekennzeichnet, dass** mindestens ein Ende der Blattfeder (30) umschließend von einem Element im Bereich der Rad-Anbindungsstelle (34) und/oder einem Element im Bereich der Verbindungsstelle zwischen Blattfeder (30) und Seitenträger (14) aufgenommen ist.

9. Rahmen nach einem oder mehreren der vorstehenden Ansprüche **dadurch gekennzeichnet, dass** die Rad-Anbindungsstellen (34) über einen sich in Fahrzeugquerrichtung erstreckenden Querträger (46. 48) miteinander verbunden sind.

10. Rahmen nach einem der vorstehenden Ansprüche, **dadurch gekennzeichnet, dass** die mindestens eine Blattfeder (30) in Fahrzeugquerrichtung betrachtet innenseitig der korrespondierenden Rad-Anbindungsstelle (34) an dem Querträger (46, 48) angeordnet ist.

11. Rahmen nach einem oder mehreren der vorstehenden Ansprüche, **dadurch gekennzeichnet, dass**
a) die Rad-Anbindungsstellen (34) ausschließlich über die jeweils mindestens eine Blattfeder (30) mit dem Seitenträger (14) verbunden sind
und/oder
b) mindestens ein Seitenträger (14) oder ein Seitenrahmen (12) zusammenklappbar ausgebildet ist.

12. Rahmen nach einem oder mehreren der vorstehenden Ansprüche, **dadurch gekennzeichnet, dass** die Seitenträger (14) im in Fahrzeuglängsrichtung betrachtet hinteren Bereich des Lasttransportfahrzeugs über einen sich in Fahrzeugquerrichtung erstreckenden Querträger (46, 48) miteinander verbunden sind, der als rückseitige Abstützung einer Rückenlehne (26) dient.

13. Lasttransportfahrzeug einschließlich Fahrradanhänger umfassend einen Rahmen (10) nach einem oder mehreren der vorstehenden Ansprüche.

14. Lasttransportfahrzeug nach dem vorstehenden Anspruch, **dadurch gekennzeichnet, dass** eine rechte Rad-Anbindungsstelle (34) und eine linke Rad-Anbindungsstelle (34) jeweils über mindestens eine Blattfeder (30) an einem rechten bzw. einem linken Seitenträger (14) angebunden sind und die rechte Rad-Anbindungsstelle (34) und die linke Rad-Anbindungsstelle (34) zusätzlich über ein weiteres Feder- und/oder Dämpferelement (42) an dem rechten Seitenträger (14) bzw. an dem linken Seitenträger angebunden sind.

15. Lasttransportfahrzeug nach dem vorstehenden Anspruch, **dadurch gekennzeichnet, dass** die Rad-Anbindungsstellen (34) jeweils über mindestens eine sich überwiegend in Fahrzeuglängsrichtung erstreckende Blattfeder (30) und mindestens eine sich überwiegend in Fahrzeughochrichtung erstreckende Schraubenfeder (44) und/oder Luftfeder an den Seitenträgern (14) angebunden sind.

## Claims

1. Frame for a transport area of a two-track load transport vehicle in the form of a bicycle trailer, having at least two side members (14) extending in the longitudinal direction, arranged spaced apart from each other in the vehicle transverse direction and connected with each other via at least one element extending in the vehicle transverse direction, wherein wheel connecting points (34) corresponding to the side members (14) are tethered to the side members (14) via at least one leaf spring (30), wherein
a) at least one of the two side members (14), viewed in the vehicle longitudinal direction, extends from a connecting point between the side member (14) and the leaf spring (30) in a downward direction such that the side member (14) extends into a region below the corresponding wheel connecting point (34) and thus a free space extending in the vehicle vertical direction between the wheel connecting point (34) and the side member (14) extending into the region below this wheel connecting point (34), is formed,
or
b) at least one of the two side members (14), viewed in the vehicle longitudinal direction, extends from a connecting point between the side member (14) and the leaf spring (30) in an upward direction such that the side member (14) extends into a region above the corresponding wheel connecting point (34) and thus a free space extending in the vehicle vertical direction between the wheel connecting point (34) and the side member (14) extending into the region above this wheel connecting point (34), is formed,
**characterized in that**
in the free space, a further spring element and/or damping element (42) is arranged.

2. Frame according to the preceding claim, **characterized in that** the further spring element and/or damping element (42) is a coil spring (44) and/or a pneumatic spring.

3. Frame according to one of the preceding claims, **characterized in that** the further spring element and/or damping element (42) is directly or indirectly fixed to the corresponding wheel connecting point (34) and/or to a portion of the side member (14) below or above the wheel connecting point (34).

4. Frame according to one of the preceding claims, **characterized in that** the free space, viewed in the vehicle vertical direction, extends over at least 2 cm.

5. Frame according to the preceding claim, **characterized in that** at least one of the side members (14) is designed such that, in the side view of the load transport vehicle, it surrounds the wheel connecting point (34) of the corresponding wheel at least by half from the bottom or the top.

6. Frame according to one or several of the preceding claims, **characterized in that** at least one of the side members (14) is designed as a closed side frame (12).

7. Frame according to the preceding claim and variant a) of claim 1, **characterized in that** the side member (14) completely surrounds the wheel connecting point (34) of the corresponding wheel.

8. Frame according to one or several of the preceding claims, **characterized in that** at least one end of the leaf spring (30) is held in a surrounding fashion by an element in the region of the wheel connecting point (34) and/or an element in the region of the connecting point between the leaf spring (30) and the side member (14).

9. Frame according to one or several of the preceding claims, **characterized in that** the wheel connecting points (34) are connected with each other via a cross member (46, 48) extending in the vehicle transverse direction.

10. Frame according to one of the preceding claims, **characterized in that**, viewed in the vehicle transverse direction, the at least one leaf spring (30) is arranged on the inside of the wheel connecting point (34) on the cross member (46, 48).

11. Frame according to one or several of the preceding claims, **characterized in that**
a) the wheel connecting points (34) are connected with the side member (14) exclusively via the corresponding at least one leaf spring (30),
and/or
b) at least one side member (14) or one side frame (12) is of collapsible design.

12. Frame according to one or several of the preceding claims, **characterized in that** in the, viewed in the vehicle longitudinal direction, rear region of the load transport vehicle, the side members (14) are connected with each other via a cross member (46, 48) extending in the vehicle transverse direction and serving as a rear-side support to a backrest (26).

13. Load transport vehicle, including a bicycle trailer, comprising a frame (10) according to one or several of the preceding claims.

14. Load transport vehicle according to the preceding claim, **characterized in that** a right-side wheel connecting point (34) and a left-side wheel connecting point (34) are each tethered via at least one leaf spring (30) to a right-side side member and a left-side side member (14), respectively, and that in addition, the right-side wheel connecting point (34) and the left-side wheel connecting point (34) are each tethered via a further spring element and/or damping element (42) to the right-side side member (14) and the left-side side member, respectively.

15. Load transport vehicle according to the preceding claim, **characterized in that** the wheel connecting points (34) are each tethered to the side members (14) via at least one leaf spring (30) extending predominantly in the vehicle longitudinal direction and at least one coil spring (44) and/or pneumatic spring extending predominantly in the vehicle vertical direction.

## Revendications

1. Châssis destiné à une zone de transport d'un véhicule de transport de charge sur deux voies sous la forme d'un attelage pour vélo, avec au moins deux longerons (14) s'étendant dans le sens longitudinal qui sont agencés espacés dans le sens transversal de véhicule et sont reliés les uns aux autres par au moins un élément s'étendant dans le sens transversal de véhicule, dans lequel des points d'attache de roue (34) correspondant aux longerons (14) sont reliés aux longerons (14) par l'intermédiaire d'au moins un ressort à lame (30), dans lequel
a) au moins un des deux longerons (14) présente, considéré dans le sens longitudinal de véhicule à partir d'un point de liaison situé entre le longeron (14) et le ressort à lame (30), un tracé orienté vers le bas de telle manière que le longeron (14) s'étend dans une zone située en dessous du point d'attache de roue (34) correspondant et qu'un espace libre, s'étendant dans le sens vertical de véhicule entre le point d'attache de roue (34) et le longeron (14) s'étendant dans la zone située en dessous dudit point d'attache de roue (34), est formé,
ou
b) au moins un des deux longerons (14) présente, considéré dans le sens longitudinal de véhicule à partir d'un point de liaison situé entre le longeron (14) et le ressort à lame (30), un tracé orienté vers le haut de telle manière que le longeron (14) s'étend dans une zone située au-dessus du point d'attache de roue (34) correspondant et qu'un espace libre, s'étendant dans le sens vertical de véhicule entre le point d'attache de roue (34) et le longeron (14) s'étendant dans la zone située au-dessus dudit point d'attache de roue (34), est formé,
**caractérisé en ce que**
un autre élément formant ressort et/ou amortisseur (42) est agencé dans l'espace libre.

2. Châssis selon la revendication précédente, **caractérisé en ce que** l'autre élément formant ressort et/ou amortisseur (42) est un ressort hélicoïdal (44) et/ou un ressort pneumatique.

3. Châssis selon l'une des revendications précédentes, **caractérisé en ce que** l'autre élément formant ressort et/ou amortisseur (42) est fixé directement ou indirectement au point d'attache de roue (34) correspondant et/ou à une partie du longeron (14) située en dessous ou au-dessus du point d'attache de roue (34).

4. Châssis selon l'une des revendications précédentes, **caractérisé en ce que**, considéré dans le sens vertical de véhicule, l'espace libre s'étend sur au moins 2 cm.

5. Châssis selon la revendication précédente, **caractérisé en ce qu'**au moins un des longerons (14) est réalisé de telle manière qu'il entoure le point d'attache de roue (34) de la roue correspondante au moins à mi-distance du bas ou du haut en vue latérale du véhicule de transport de charge.

6. Châssis selon une ou plusieurs des revendications précédentes, **caractérisé en ce qu'**au moins un des longerons (14) est réalisé sous forme de châssis latéral (12) fermé.

7. Châssis selon la revendication précédente et selon la variante a) de la revendication 1, **caractérisé en ce que** le longeron (14) entoure complètement le point d'attache de roue (34) de la roue correspondante en vue latérale du véhicule de transport de charge.

8. Châssis selon une ou plusieurs des revendications précédentes, **caractérisé en ce qu'**au moins une extrémité du ressort à lame (30) est accueillie de manière à être entourée par un élément dans la zone du point d'attache de roue (34) et/ou un élément dans la zone du point de liaison entre ressort à lame (30) et longeron (14).

9. Châssis selon une ou plusieurs des revendications précédentes, **caractérisé en ce que** les points d'attache de roue (34) sont reliés les uns aux autres par une traverse (46, 48) s'étendant dans le sens transversal de véhicule.

10. Châssis selon l'une des revendications précédentes, **caractérisé en ce que**, considéré dans le sens transversal de véhicule, le au moins un ressort à lame (30) est agencé au niveau de la traverse (46, 48) du côté intérieur du point d'attache de roue (34) correspondant.

11. Châssis selon une ou plusieurs des revendications précédentes, **caractérisé en ce que**
a) les points d'attache de roue (34) sont reliés au longeron (14) exclusivement par l'intermédiaire du respectivement au moins un ressort à lame (30)
et/ou
b) au moins un longeron (14) ou un châssis latéral (12) est réalisé de manière à pouvoir être replié.

12. Châssis selon une ou plusieurs des revendications précédentes, **caractérisé en ce que**, dans une zone arrière, considérée dans le sens longitudinal de véhicule, du véhicule de transport de charge, les longerons (14) sont reliés les uns aux autres par une traverse (46, 48) s'étendant dans le sens transversal de véhicule et servant d'appui arrière pour un dossier (26).

13. Véhicule de transport de charge incluant un attelage de vélo comprenant un châssis (10) selon une ou plusieurs des revendications précédentes.

14. Véhicule de transport de charge selon la revendication précédente, **caractérisé en ce qu'**un point d'attache de roue droit (34) et un point d'attache de roue gauche (34) sont chacun reliés à un longeron (14) droit, respectivement gauche, par au moins un ressort à lame (30) et le point d'attache de roue droit (34) et le point d'attache de roue gauche (34) sont en outre reliés au longeron droit (14), respectivement au longeron gauche, par un autre élément formant ressort et/ou amortisseur (42).

15. Véhicule de transport de charge selon la revendication précédente, **caractérisé en ce que** les points d'attache de roue (34) sont reliés aux longerons (14) chacun par au moins un ressort à lame (30) s'étendant principalement dans le sens longitudinal de véhicule et au moins un ressort hélicoïdal (44) et/ou ressort pneumatique s'étendant principalement dans le sens vertical de véhicule.
